# EUROPÄISCHE PATENTSCHRIFT

(11) **EP 0 614 780 B1**
(45) Veröffentlichungstag und Bekanntmachung des Hinweises auf die Patenterteilung: **17.04.1996**
(21) Anmeldenummer: 93103545.5
(22) Anmeldetag: 05.03.1993
(51) Int. Cl.: B60L 5/20

(54) **Bruchmelder für Schleifstücke**
Break warning for sliding collector
Détecteur de bris pour pièce de frottement

(43) Veröffentlichungstag der Anmeldung: 14.09.1994
(73) Patentinhaber: SGL CARBON AG, D-65203 Wiesbaden (DE)
(72) Erfinder: Müller, Hans Josef, W-5300 Bonn 2 (DE); Walbröl, Bruno, W-5484 Bad Breisig 2 (DE)

(56) Entgegenhaltungen:
- EP-A- 0 078 159
- EP-A- 0 269 307
- EP-A- 0 402 666
- DE-U- 8 803 377
- US-A- 3 523 288

## Beschreibung

Gegenstand der Erfindung ist ein Bruchmelder für ein elektrischen Strom übertragendes, im wesentlichen aus Kohlenstoff oder vollständig aus Kohlenstoff bestehendes Schleifstück an einer Stromabnehmervorrichtung elektrisch betriebener Fahrzeuge, wobei das Schleifstück fest auf dem Schleifstückträger der Stromabnehmervorrichtung verankert ist, wobei das Schleifstück an der dem Schleifstückträger zugewandten Seite über mindestens einen wesentlichen Teil seiner Längserstreckung eine geradlinig verlaufende Ausnehmung aufweist.

Schleifbügel für die Abnahme und Weiterleitung von elektrischem Strom von Zuleitungen auf Stromabnehmersysteme von Fahrzeugen bestehen aus einem oder aus mehreren Schleifstücken (auch Schleifleisten genannt) aus Kohlenstoff oder aus einem Material, das neben Binde- und/oder Imprägniermitteln im wesentlichen Kohlenstoff enthält. Unter dem Begriff Kohlenstoff soll im Sinne dieser Erfindung auch Graphit verstanden werden. Die Schleifstücke sind, z.B. mittels einer Klemmfassung, Lötung oder Klebung auf einem metallischen Träger befestigt. Diese Kombination aus Schleifstück und metallischem Träger ist wiederum Teil einer Stromabnehmervorrichtung eines elektrisch angetriebenen Fahrzeugs, z.B. eines Pantographen. Zur Übertragung elektrischer Ströme von einem elektrischen Leiter, wie dem Fahrdraht der Oberleitung einer Eisenbahn, werden die Schleifbügel gegen den elektrischen Leiter gedrückt. Die beim Fahrbetrieb wirkenden Reibungskräfte zwischen dem Schleifstück und dem elektrischen Stromleiter führen zu einem langsamen Verschleiß des Schleifstücks, das deshalb in bestimmten Betriebsintervallen oder nach entsprechenden visuellen Kontrollen ausgetauscht werden muß. Eine Beschädigung von elektrischer Stromzuleitung oder Stromabnehmervorrichtung ist bei normalem abriebbedingten Verschleiß und bei ordnungsgemäß durchgeführter Wartung nicht zu befürchten. Anders ist die Situation, wenn das Schleifstück infolge von Stößen oder Schlägen, die auch beim Fahrbetrieb auftreten können oder aufgrund thermisch bedingter Materialspannungen oder infolge von Vorschädigungen durchgehende Risse bekommt oder gar bricht. Bei derartigen Schäden ist der Bestand verschleißarmer Laufflächen nicht mehr gewährleistet und es kann, z.B. nach Ablösung von Teilen einer Schleifleiste und hier besonders bei Hochgeschwindigkeitszügen zu umfangreichen, die Sicherheit des Fahrbetriebes beeinträchtigenden und kostenintensiven Schäden kommen.

Es hat deshalb nicht an Versuchen gefehlt, die Schleifstücke oder Schleifbügel für Stromabnehmer mit Verschleißmeldern oder Bruchdetektoren auszurüsten, die bei zu weit fortgeschrittenem Verschleiß rechtzeitig ein Signal geben und/oder bei kritischen Schäden zur Absenkung der Stromabnehmervorrichtung, d.h. bei elektrischen Eisenbahnen des Pantographen, führen.

Durch das Deutsche Gebrauchsmuster Nr. G 88 03 377.5 wird ein Schleifbügel vorgeschlagen, in dessen Schleifstück im Abstand vom Metallträger wenigstens ein gegen das Schleifstück elektrisch isolierter elektrischer Leiter angeordnet und mit Signalgebern verbunden ist. Mit der Offenlegungsschrift der Europäischen Patentanmeldung Nr. 0 269 307 wurde eine Kontrolleinrichtung für den Schleifbügelverbrauch bekannt, bei der Lichtleiter am oder im Schleifstück angebracht sind. Wenn durch Abrieb, im ersten Fall die Isolation des elektrischen Leiters entfernt ist und ein Strom über den Leiter zum Signalgeber fließt oder im zweiten Fall die Lichtleitfähigkeit ein bestimmtes Maß unterschreitet, tritt eine Warneinrichtung in Tätigkeit. Beide beschriebenen Einrichtungen haben den Nachteil, daß z.B. Brüche des Schleifstücks oder diesen vorausgehende Schädigungen, wie Risse, nicht sicher gemeldet werden. Des weiteren sind außen auf den Schleifstücken angebrachte Leiter Beschädigungen durch äußere Einwirkungen, wie z.B. Schlag- und Witterungseinwirkungen mit der Folge von Fehlmeldungen ausgesetzt. Will man diese Nachteile durch Anbringung der Leiter im Inneren der Schleifstücke umgehen, entsteht hoher Fertigungsaufwand.

Bei der Anordnung nach EP-PS 0 078 159 ist in einer Ausnehmung am Fuß des Schleifstückes ein mit dem Druck eines Fluids beaufschlagter, dehnbarer Behälter aus einem Gummi angebracht, der platzt, wenn er nicht mehr vollständig von dem ihn umgebenden Gehäuse abgestützt ist. Auch bei dieser Anordnung kann das Vorhandensein von Rissen oder Brüchen erst angezeigt oder registriert werden, wenn bei dem Schadensereignis ein Spalt kritischer Größe entstanden ist, der zum Platzen des dehnbaren Behälters führt. Ein sicheres Ansprechen auf Schäden, die für die Betriebssicherheit relevant sind, ist hier also auch nicht gegeben.

Die Anordnung nach DE-OS 39 19 008 kommt ohne einen dehnbaren Behälter aus. Der mit einem Druckfluid beaufschlagte Kanal auf der Trägerseite des Schleifstücks wird von einer Nut gebildet, in die ein U-förmiges metallisches Längsprofil gasdicht eingeklebt ist. Die aus dem Schleifstückmaterial bestehenden Wände des Kanals sind mit einem Kunstharzüberzug abgedichtet. Bei Entstehen einer Undichtigkeit in den Begrenzungsflächen des Kanals, z.B. durch einen Riß im Schleifstück, reagiert das Detektorsystem unmittelbar. Der Nachteil dieses Systems ist die Paarung von Metall und Kohlenstoff als Werkstoffe stark unterschiedlicher thermischer Ausdehnungskoeffizienten und das Vorliegen ausgedehnter Klebe- oder Kittflächen aus Kunstharz, die die Abdichtung an den Trennzonen zwischen diesen Werkstoffen sicherstellen müssen. Beim Betrieb dieser bereits bei kleinen Schäden ansprechenden Anordnung kann es infolge von Temperaturwechseln allein oder in Verbindung mit den durch Stöße verursachten Schwingungen im Schleifstück zu Ablösungen kommen, die einen Ausfall des Schleifstücks nur vortäuschen. Gänzlich ungeeignet ist diese Anordnung für Schleifstückbefestigungen auf dem Träger durch Löten. Die dabei auftretenden Temperaturen, die meist über 200 °C liegen, würden die Kunststoffe bis zur Funktionsuntüchtigkeit schädigen.

Der Erfindung lag daher die Aufgabe zugrunde, einen Bruchmelder für auf einem Träger befestigte Schleifstücke zu schaffen, der mechanisch robust und gegen Temperaturwechsel unempfindlich ist, bei dem bei der Herstellung und dem Zusammenbau auftretende hohe Temperaturen keinen negativen Einfluß auf die Funktionsfähigkeit haben und der bezüglich seiner Ansprechgenauigkeit einstellbar ist.

Die Aufgabe wird mit einem Bruchmelder der eingangs genannten Art durch die Merkmale des kennzeichnenden Teils des Anspruchs 1 gelöst. Die Unteransprüche geben bevorzugte Ausführungsformen der Erfindung wieder.

Die in dem Schleifstück auf dem dem Schleifstückträger zugewandten Bereich befindliche Ausnehmung kann jede durch Strangpressen oder materialabtragende Bearbeitung erzielbare Querschnittsform haben. Vorzugsweise ist ihr Querschnitt jedoch quadratisch, rechteckig, trapezförmig oder rund. Sie erstreckt sich ohne Knicke über die ganze Länge oder fast die ganze Länge des Schleifstücks und durchsetzt mindestens an einem Ende dessen Stirnfläche. An dem Ende, das der obligatorischen Öffnung entgegengesetzt ist, kann die Ausnehmung kurz vor der endseitigen Stirnfläche enden oder sie kann zur Aufnahme eines Halteelements für den Stab, im folgenden auch Signalstab genannt, wie z.B. einen Haltering, eine Hülse, eine Schraube oder einen Haltestift erweitert sein. Vorzugsweise ist die Ausnehmung zur Seite des Schleifstückträgers hin über ihre ganze Länge offen. Sie kann jedoch, insbesondere bei einem runden Querschnitt, im Schleifstück etwas höher angeordnet sein und ist dann weitgehend geschlossen. Sie hat dann nur an dem Ende des Schleifstücks, an dem sich die Haltevorrichtung mit dem bewegbaren Arretierungselement befindet, eine Nut, durch die das Kupplungsteil dieses bewegbaren Arretierungselements in den Stab eingreift und in der dieses Teil bei einem Bruch des Stabes bewegbar ist. Die Ausnehmung befindet sich grundsätzlich in der dem Schleifstückträger benachbarten Hälfte des Schleifstücks. Je nach Querschnittshöhe des Schleifstücks liegt bei bevorzugten Ausführungsformen die auf den Querschnitt des Schleifstücks bezogene obere Begrenzung der Ausnehmung zwischen einem Drittel und einem Sechstel der Querschnittshöhe des Schleifstücks. Bei großen Querschnittshöhen wird sich die obere Begrenzung eher einem Sechstel und bei geringeren einem Drittel der Querschnittshöhe nähern. Eine solche Vorgehensweise trägt der Schaffung eines günstigen Verhältnisses von möglicher Verschleißhöhe zur Lage der Ausnehmung des Bruchmelders Rechnung.

Die Herstellung der mit der Ausnehmung versehenen Schleifstücke und der dazugehörigen Signalstäbe geschieht nach bekannten Verfahren, bevorzugt durch Strangpressen sogenannter grüner, aus Kohlenstoffüller und Binder bestehender Mischungen, nachfolgendes Verkoken des Binders und gegebenenfalls Graphitieren. Eine leichte Wölbung der Schleifstücke, der auch die eingeformte Ausnehmung und der in diese einzulegende Signalstab folgen sollten, wird durch Auslegen der noch verformbaren grünen Schleifstücke und Signalstäbe auf entsprechend gewölbten Unterlagen und nachfolgendes Aushärten erzielt. Falls es erforderlich ist, werden sowohl Ausnehmungen als auch Signalstäbe nach den thermischen Produktionsschritten noch an den Oberflächen mechanisch, z.B. durch Schleifen oder Fräsen bearbeitet. Wo dies vertretbar ist, kann aber sowohl die Ausnehmung im Schleifstück als auch der Signalstab allein durch materialabtragende Bearbeitungsschritte hergestellt werden.

Die für ein Einlegen in die Ausnehmungen bestimmten Signalstäbe sind grundsätzlich aus einem Material, das aufgrund seines Aufbaues nicht duktil oder biegsam ist und das bei mechanischer Belastung einem Sprödbruch unterliegt. Neben Kohlenstoffmaterialien kommen hierfür keramische Werkstoffe oder erhebliche Anteile Füllstoffe enthaltende Kunstharze in Frage. Zu den verwendbaren keramischen Materialien zählen beispielsweise Porzellane, oxidische, z.B. Al₂O₃, SiO₂, MgO allein oder in Anteilen enthaltende oder carbidische Werkstoffe wie SiC. Aus der Gruppe der Kunstharze kommen nur diejenigen in Frage, die bei Temperaturen bis ca. 120 °C noch spröd brechen. Neben einigen, diese Bedingung erfüllenden Varianten von Polyurethanen, Polymethacrylaten und Polyacrylaten ist hier die Gruppe der Duroplasten als geeignet zu nennen. Vorzugsweise enthalten diese Kunstharzmassen für die Herstellung der Signalstäbe mehr als 30 Gewichtsprozent an pulverigen oder körnigen Füllstoffen aus nicht elastischem Material. Die Herstellung von Stäben aus keramischem Material und aus Kunstharzen bzw. aus Füller enthaltenden Kunstharzmassen ist Stand der Technik und wird deshalb an dieser Stelle nicht näher beschrieben.

Der aus sprödem Material bestehende Signalstab ist in seiner Form bezüglich Querschnitt und Länge der Form der Ausnehmung im Schleifstück so angepaßt, daß er unter Einhaltung bestimmter Seitenabstände zu den Wänden der Ausnehmung in der Ausnehmung plazierbar ist. In einer bevorzugten Ausführung füllt er die Ausnehmung weitgehend aus und steht an der dem Schleifstückträger zugewandten Seite nicht über sie hinaus. Für das Funktionieren des Bruchmelders ist es jedoch unabdingbar, daß der Stab in der Ausnehmung unter der Einwirkung einer Zugkraft verschiebbar bleibt. Durch Einhaltung bestimmter Passungen bzw. Einstellung bestimmter Abstände kann die Empfindlichkeit des Bruchmelders eingestellt werden. Die höchste Empfindlichkeit liegt vor, wenn der Stab fast ohne Abstand eingepaßt ist und an den Wänden der Ausnehmung gleitend anliegt. Das Schleifstück schädigende Ereignisse wie Verbiegungen des Schleifstücks oder Stöße teilen sich dann dem Signalstab gleichermaßen mit und lösen, falls das Schleifstück geschädigt wurde, auch den Bruch des Stabes und den Regelmechanismus aus. Für ein sicheres Funktionieren dieser auf hohe Empfindlichkeit eingestellten Anordnung muß die am Signalstab angreifende Zugkraft vergleichsweise hoch eingestellt sein, um die bestehenden Reibungswiderstände zwischen den Oberflächen des Stabes und der Ausnehmung zu überwinden und um die Bruchempfindlichkeit des materialbedingt zugspannungsempfindlichen Stabes zu erhöhen. Für nicht so große Empfindlichkeitsanforderungen werden größere Abstände vorgesehen. Bei bevorzugten Ausführungsformen betragen diese Abstände, jeweils zwischen einer Wand des Signalstabes und einer dieser Wand benachbarten Wand der Ausnehmung, nicht mehr als 0,1 mm für noch relativ empfindliche Einstellungen und nicht mehr als 0,5 mm für unempfindliche Einstellungen. Selbstverständlich können auch noch größere Abstände angewandt werden. Der Bruchmelder reagiert dann nur noch auf schwerste Beschädigungen. Eine zweite, die Empfindlichkeit des Systems beeinflussende Größe ist die Zugkraft mit der der Signalstab belastet wird. Bei geringer Zugkraft ist die Empfindlichkeit gering, bei hoher Zugkraft vergleichsweise groß. Bei der Einstellung der Zugkraft muß ganz allgemein den Gegebenheiten der Bruchwahrscheinlichkeit der Stäbe Rechnung getragen werden, die in Abhängigkeit vom Material und ihrem Querschnitt eine bestimmte, mit einer Streuung behaftete Zugfestigkeit haben. Zur Minimierung dieser Streuung und um damit einen möglichst großen Einstellbereich für die Zugkraft zu erhalten, sind die Signalstäbe vorzugsweise aus feinkörnigem Material aufgebaut.

Um den Stab unter Zugspannung zu setzen, wird er an einem Ende in einer nicht beweglichen Befestigung fixiert. Dazu sind alle durch den Stand der Technik bekannten Mittel geeignet, wie z.B. das Eingreifen von im Schleifstückträger befestigten Stiften oder einer dort befestigten Schraube in entsprechende Ausnehmungen des Stabes oder das Festlegen mittels eines Sicherungsringes oder einer über das Stabende geschobenen und dort festgeklebten Sicherungsbuchse, die ein Gegenlager in einer die Ausnehmung für den Stab umgebenden, entsprechend größeren Ausnehmung haben. An seinem anderen Ende ist der Stab wiederum mit bekannten Mitteln, die den im Vorstehenden beschriebenen Beispielen zur Befestigung des anderen Stabendes gleichen, in einer Haltevorrichtung festgelegt, die ein Element enthält, das mit dem Stabende form- oder kraftschlüssig verbunden ist, das entlang der Längsachse des Signalstabes bewegbar ist und über das der Stab mit einer Zugkraft belastet werden kann. Diese Haltevorrichtung besteht beispielsweise aus einem im Inneren des Schleifstückträgers befestigten Zylinders, in dem ein Kolben verschiebbar gelagert ist.

Das Ende des Signalstabs ist über ein Zwischenstück so an dem Kolben befestigt, daß bei einem Bruch des Signalstabs der Kolben und das an ihn gekoppelte Signalstabfragment in Richtung des Endes des Schleifbügels bewegt werden kann. Zur Erzeugung der den Stab belastenden Zugkraft wirkt auf der anderen Seite des Kolbens eine nach außen in Längsrichtung der Schleifstück-/Stabanordnung gerichtete Druckkraft, die den Stab unter Zugspannung setzt. Diese Druckkraft kann mit dem Fachmann bekannten Mitteln beispielsweise durch eine Druckfeder oder ein Druckfluid, z.B. pneumatisch oder hydraulisch erzeugt werden. Nach einer anderen Ausführungsform können die Mittel, mit denen der Stab befestigt ist, Teil eines in einer Führung laufenden Schlittens, der mit einer Druckkraft beaufschlagt ist, sein.

Mit der beschriebenen Haltevorrichtung ist eine Vorrichtung funktionell gekoppelt, die der Signalerzeugung und -Weiterleitung dient. Diese Vorrichtung kann Teil der Haltevorrichtung oder von dieser entfernt angeordnet sein. Wenn am Schleifstück ein Schadensereignis eintritt, das Maßnahmen zum Schutz der Stromübertragungseinrichtung erfordert, d.h. wenn der Signalstab bricht, wird das nicht mehr arretierte Stabstück und das über ein Befestigungselement an es gekoppelte verschiebbare Teil durch die Druckkraft nach vorn bewegt. Infolge dieser Bewegung können auf bekannte Weise Signale oder Regelimpulse erzeugt werden, mit Hilfe derer Warneinrichtungen oder notwendige Schutzmaßnahmen wie z.B. das Absenken des Pantographen, ausgelöst werden. Die Erzeugung der Signale kann beispielsweise durch Schließen bzw. Lösen elektrischer Kontakte oder mittels induktiver Effekte durch den sich bewegenden Kolben oder Schlitten geschehen. Eine andere Möglichkeit liegt in der Betätigung von Schaltelementen für Druckfluide durch den Kolben oder Schlitten, die dazu z.B. direkt auf die Sicherungsvorrichtungen einwirken oder, sofern die Druckkraft mittels Fluiden aufgebracht wird, in der Verwertung des Abfalls des Fluiddrucks im Zylinder.

Das Bruchmeldesystem kann zusammen mit dem Schleifstück auf dem Schleifstückträger oder auch nach der Befestigung des Schleifstücks auf dem Träger montiert werden. Ersteres Verfahren bietet sich z.B. bei Befestigungen mittels Klemmfassungen oder Klebungen, das zweite besonders bei Verwendung der Löttechnik an. Beim Festlöten des Schleifstücks auf dem Träger treten hohe Temperaturen auf, die Kunststoffteile wie Klebungen, Drucksäcke oder Dichtringe schädigen oder zerstören. Es muß deshalb bei diesem Befestigungsverfahren auch möglich sein, den Bruchmelder nach dem Lötprozeß zu montieren. Dies ist nur bei der erfindungsgemäßen Vorrichtung gegeben: Der Signalstab kann nach dem Lötprozeß in die Ausnehmung im Schleifstück geschoben und z.B. an dem nicht beweglichen Ende mit einem Sicherungsring oder einer aufgeklebten Sicherungshülse festgelegt werden. In entsprechender Weise wird das andere Ende des Signalstabs an dem beweglichen und die Zugkraft übertragenden Teil der anderen Haltevorrichtung festgelegt. Letztere wurde vorher auf konventionelle Weise in dafür vorgesehenen Halterungen im Profil des Schleifstückträgers befestigt. Die folgenden Zeichnungen geben die Erfindung beispielhaft wieder.

Es zeigen:
- Fig. 1,: einen Querschnitt durch ein auf einen Schleifstückhalter montiertes Schleifstück mit eingebautem Signalstab an der Stelle, an der der Signalstab in der beweglichen Halterung festgelegt ist.
- Fig. 2,: einen durch die Längsachse einer erfindungsgemäßen Anordnung geführten Vertikalschnitt.
- Fig. 3,: einen durch die Längsachse einer erfindungsgemäßen Anordnung geführten Vertikalschnitt am Ort der bewegbaren Haltevorrichtung.
- Die Figuren 4, 5 und 6,: Möglichkeiten zum Festlegen des Signalstabs an der nicht bewegbaren Seite der erfindungsgemäßen Anordnung in Seitenansichten (Fig. 5 und 6), bzw. in einer Draufsicht (Fig. 4).
- Fig. 7 und 8,: Querschnitte durch erfindungsgemäße Anordnungen an der Stelle, an der der Signalstab nicht bewegbar festgelegt ist sowie Querschnittsformen von und Befestigungsmöglichkeiten für Signalstäbe.

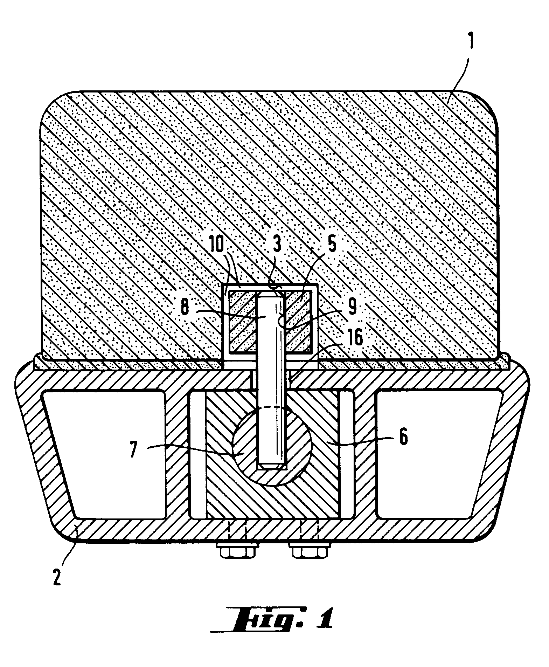

In Fig. 1 ist ein auf einem Schleifstückträger 2 befestigtes Schleifstück 1 zu sehen. Das Schleifstück 1 ist mit einer mittig in Längsrichtung verlaufenden Nut 3 von rechteckigem Querschnitt versehen, in der ein der Querschnittsform der Nut 3 angepaßter Signalstab 5 verschiebbar gelagert ist. Zwischen Signalstab 5 und den Wänden der Nut 3 ist dafür ein geringer Spalt 10 vorgesehen. Im Inneren des Schleifstückträgers 2 ist eine Laufbuchse oder ein Zylinder 6 befestigt, in der/dem ein Kolben 7 parallel zur Längserstreckung des Signalstabs 5 verschiebbar gelagert ist. Der Kolben 7 hat an seiner Oberseite vorn einen Dorn 8, der sich bis in eine Bohrung 9 im Signalstab 5 erstreckt und auf diese Weise eine formschlüssige Kopplung zwischen dem beweglichen Kolben 7 und dem Signalstab 5 herstellt.

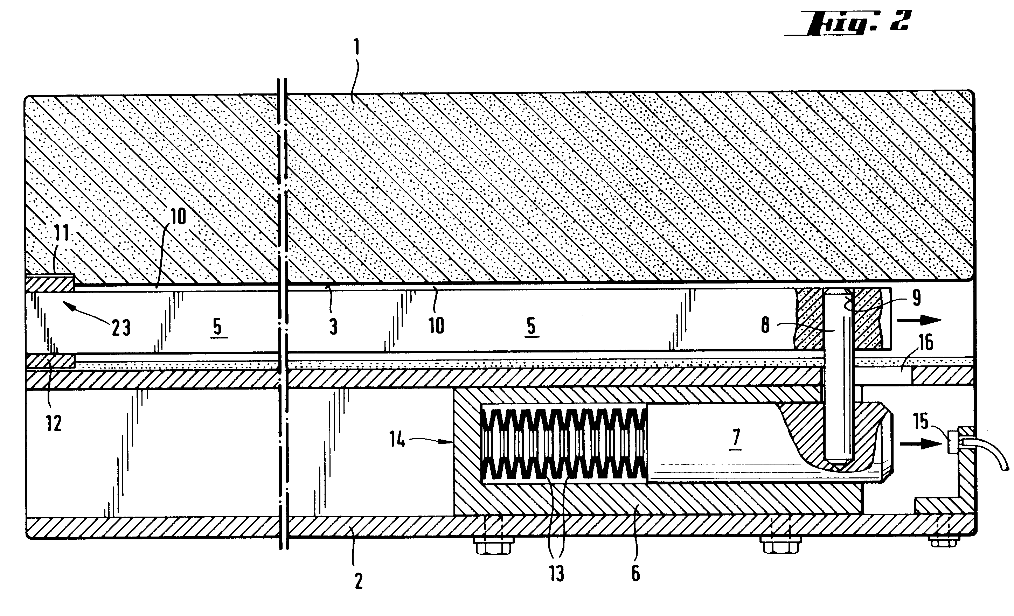

In Fig. 2 sind Schleifstück 1, Schleifstückträger 2, Längsnut 3 im Schleifstück 1, der in die Nut 3 eingelegte Signalstab 5 mit Bohrung 9, der an der Vorderseite des verschiebbaren Kolbens 7 verankerte Dorn 8, der in die Bohrung 9 des Signalstabs 5 eingreift und der Zylinder 6, in dem Kolben 7 verschiebbar gelagert ist, zu sehen. Der Signalstab 5 erstreckt sich praktisch über die ganze Länge des Schleifstücks 1. Er ist an dem der bewegbaren Befestigung gegenüberliegenden Ende in einer die Längsnut 3 einschließenden Sacklochbohrung 11 durch eine auf das Ende des Signalstabs 5 geschobene und mit diesem verklebte Hülse 12, die am Boden der Sacklochbohrung ansteht, festgelegt. Auf der entgegengesetzten Seite ist der in Laufbuchse 6 gelagerte Kolben 7 mittels einer Druckfeder 13 belastet, die ihr Widerlager am Boden der Laufbuchse 6 hat. Laufbuchse/Zylinder 6, Kolben 7, Dorn 8 und Feder 13 sind Teil einer hier nur angedeuteten Befestigungsvorrichtung 14, die im Schleifstückträger 2 fest verankert ist. Am Ende des Schleifstückträgers 2 befindet sich in Bewegungsrichtung des Kolbens 7 nach außen ein Signalgeber 15, der hier als elektrische Kontaktstelle dargestellt ist. Er könnte aber auch auf andere Weise funktionieren, z.B. als pneumatischer Schalter. Wenn Signalstab 5 bricht, wird die Arretierung des beweglichen Kolbens 7 der Haltevorrichtung 14 aufgehoben und er, 7, bewegt sich durch die Kraft der Druckfeder getrieben, unter Mitnahme des mit ihm gekoppelten Bruchstücks des Signalstabs 5 soweit in Richtung des Schleifstückträgerendes, bis er auf den Signalgeber 15 trifft. Dadurch wird dort ein Signal zur Auslösung von Maßnahmen zur Schadensbegrenzung erzeugt. Damit sich Kolben 7 in der beschriebenen Weise bewegen kann, muß im oberen Teil des Schleifstückträgers 2 eine sich über die Länge der Bewegungsstrecke des Dorns 8 erstreckende Ausnehmung 16 befinden.

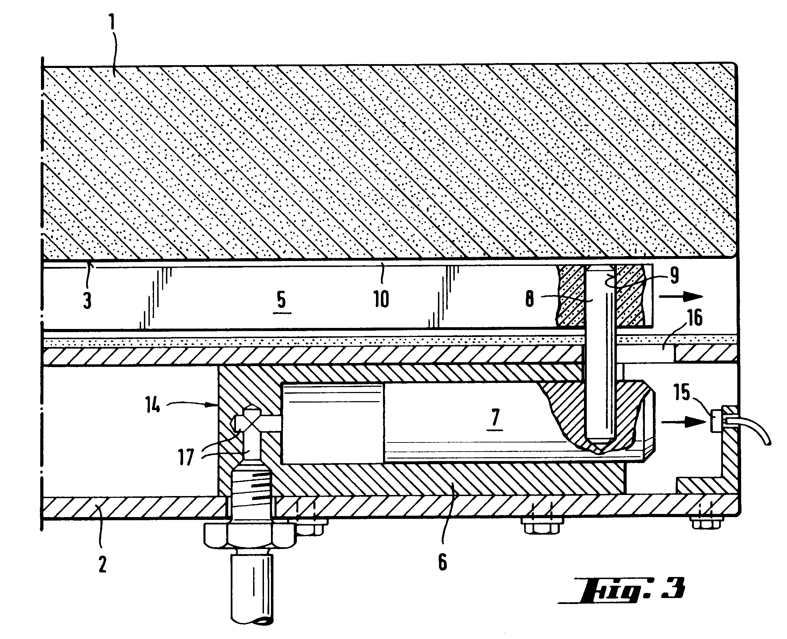

In Fig. 3 ist die Haltevorrichtung 14 mit Signalgeber nochmals ausschnittweise in einer Seitenansicht dargestellt. Der Druck auf den verschiebbaren Kolben 7 wird hier durch ein Druckfluid, z.B. Druckluft, über Leitung 17 aufgegeben.

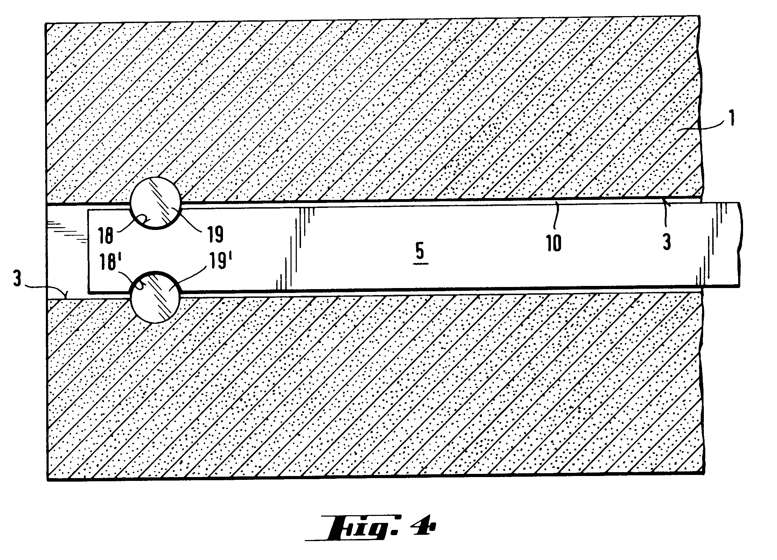

Fig. 4 gibt schematisiert eine Arretierungsmöglichkeit des Signalstabs 5 am nicht bewegbaren Ende des Schleifstücks 1 durch zwei in seitliche Nuten 18, 18' des Signalstabs 5 eingreifende Stifte 19, 19', die im hier nicht dargestellten Schleifstückträger befestigt sind, wieder.

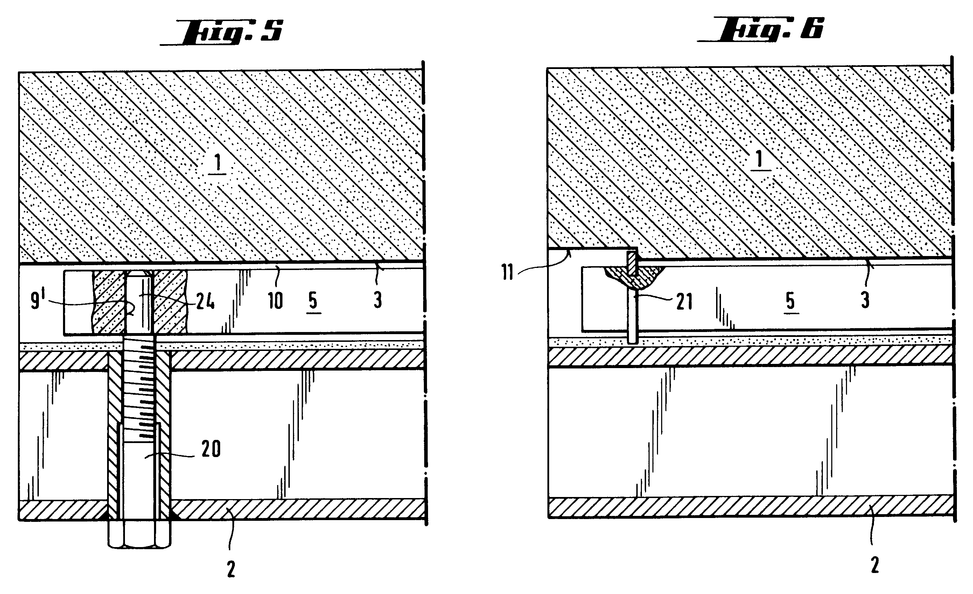

Fig. 5 zeigt eine andere, in der Wirkung der Arretierungsmöglichkeit nach Fig. 4 gleichwirkende Festlegungsmöglichkeit. Eine im Schleifstückträger 2 verankerte Schraube 20 greift mit einem an ihrem am oberen Ende befindlichen Dorn 24 in eine korrespondierende Bohrung 9' im Signalstab ein.

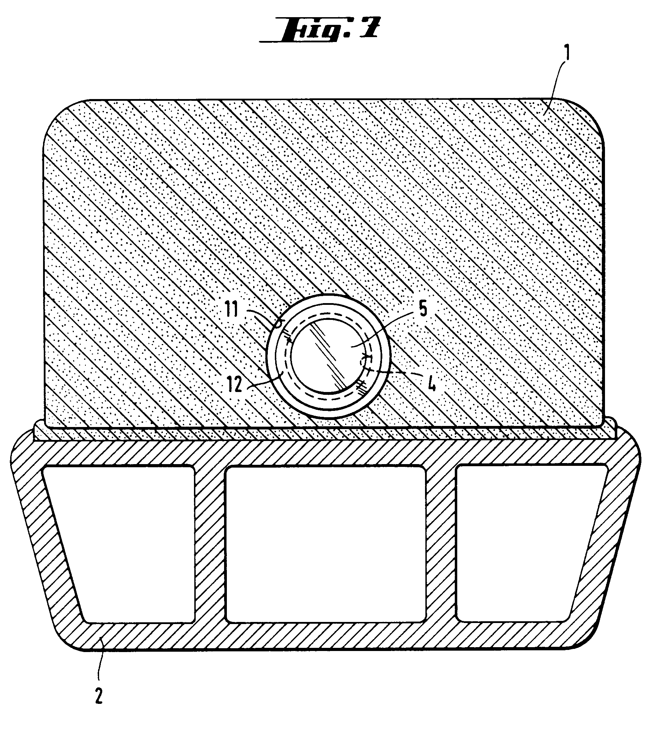

Eine wiederum andere Befestigungsmöglichkeit für den Signalstab 5 ist in Fig. 6 dargestellt. Am Ende des Schleifstücks 1 ist eine Sacklochbohrung 11 angebracht, die quasi eine Erweiterung der an dieser Stelle endenden Nut 3 oder Bohrung darstellt. Der Signalstab 5 ragt mit seinem Ende in diese Bohrung. An diesem in die Bohrung ragenden Ende des Signalstabs ist eine Nut oder sind Nuten angebracht, in die ein Sicherungsring 21 eingreift, der an seinen Rändern am Boden der Sacklochbohrung abgestützt ist.

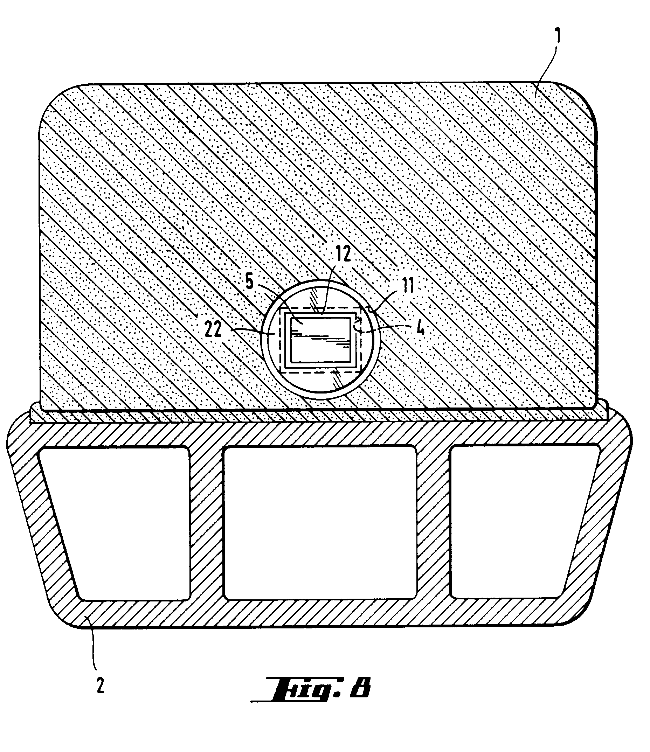

In den Fig. 7 und 8 sind stirnseitige Endansichten von Schleifstückanordnungen auf der Seite, an der der Signalstab nicht beweglich festgelegt ist, mit verschiedenen Formen und Lagen von Signalstäben 5 und diese aufnehmenden Ausnehmungen 4 wiedergegeben.

Fig. 7 zeigt eine runde Bohrung 4, die vom Schleifstück vollständig umschlossen ist und in der sich ein runder Signalstab 5 befindet, der mittels einer auf sein Ende aufgekitteten und sich am Boden der Sacklochbohrung 11 abstützenden Arretierungshülse 12 gegen Bewegungen in das Schleifstück 1 festgelegt ist.

In Fig. 8 ist eine Fig. 7 entsprechende Darstellung, jedoch mit rechteckigem Querschnitt von Signalstab 5 und diesen aufnehmender Ausnehmung 4 gezeigt. Die Arretierungshülse 12 ist hier rechteckig. Sie hat einen runden Flansch 22, mit dem sie am Boden der Sacklochbohrung 11 abgestützt ist.

## Patentansprüche

1. Bruchmelder für ein elektrischen Strom übertragendes, im wesentlichen aus Kohlenstoff oder vollständig aus Kohlenstoff bestehendes Schleifstück (1) an einer Stromabnehmervorrichtung elektrisch betriebener Fahrzeuge, wobei das Schleifstück (1) fest auf dem Schleifstückträger (2) der Stromabnehmervorrichtung verankert ist, wobei
das Schleifstück (1) an der dem Schleifstückträger (2) zugewandten Seite über mindestens einen wesentlichen Teil seiner Längserstreckung eine geradlinig verlaufende Ausnehmung (3) aufweist, dadurch gekennzeichnet, daß
in die Ausnehmung ein der Form dieser Ausnehmung (3) bezüglich Querschnitt und Länge angepaßter Stab (5) so eingelegt ist, daß er entlang der Längserstreckung der Ausnehmung (3) noch verschiebbar ist,
daß dieser Stab (5) aus einem spröden Material besteht und infolge seiner Anordnung in der Ausnehmung (3) und seiner Sprödbruchanfälligkeit bei einem Bruch des Schleifstückes (1) ebenfalls bricht und daß dieser Stab (5) an einem ersten Ende in einer nicht bewegbaren Befestigung (23) fixiert ist und an dem dem ersten Ende entgegengesetzten Ende durch ein verschiebbares Element (7) einer Haltevorrichtung (14) festgelegt ist, das den Stab (5) mit einer Zugkraft belastet, wobei diese Haltevorrichtung (14) so ausgebildet ist, daß bei einem Bruch des Schleifstücks (1) und damit des in ihm befindlichen Stabes (5) das verschiebbare Halteelement (7) der Haltevorrichtung (14) und das damit verbundene Bruchstück des Stabes (5) nicht mehr festgelegt sind, sich in Richtung der Wirkung der Zugkraft bewegen und dabei einen Schalt- und Regelmechanismus in Gang setzen, der zum Auslösen eines Warnsignals oder zur Außerbetriebnahme des Stromabnehmers führt.

2. Bruchmelder nach Patentanspruch 1,
dadurch gekennzeichnet, daß
sich die geradlinig verlaufende Ausnehmung (3) in der dem Schleifstückträger (2) zugewandten Hälfte des Schleifstücks (1) befindet.

3. Bruchmelder nach Patentanspruch 1 und 2,
dadurch gekennzeichnet, daß
der Stab (5) in der Ausnehmung (3) aus Kohlenstoff oder Graphit besteht.

4. Bruchmelder nach Patentanspruch 1 und 2,
dadurch gekennzeichnet, daß
der Stab (5) in der Ausnehmung (3) aus Keramik besteht.

5. Bruchmelder nach Patentanspruch 1 und 2,
dadurch gekennzeichnet, daß
der Stab (5) in der Ausnehmung (3) aus einem bei Temperaturen bis + 120 °C spröden Kunstharz mit einem Gehalt von mehr als 30 Gewichtsprozent an pulverigen oder körnigen Füllstoffen aus nicht elastischem Material besteht.

6. Bruchmelder nach einem der Patentansprüche 1 bis 5
dadurch gekennzeichnet, daß
die auf den Stab (5) wirkende Zugkraft mittels einer Druckfeder (13) aufgebracht ist, die gegen einen beim Bruch des Stabes (1) als bewegliches Schaltelement (7) ausgebildeten Körper der Haltevorrichtung (14) wirkt, der mit dem Stabende gekoppelt ist.

7. Bruchmelder nach einem der Patentansprüche 1 bis 5,
dadurch gekennzeichnet, daß
die auf den Stab (5) wirkende Zugkraft mittels eines mit einem Druckfluid beaufschlagten, in einem mit der Haltevorrichtung (14) fest verbundenen Zylinder (6) verschiebbaren und als bewegliches Schaltelement wirkenden Kolbens (7), der mit dem Stabende gekoppelt ist, aufgebracht ist.

8. Bruchmelder nach einem der Patentansprüche 1 bis 7,
dadurch gekennzeichnet, daß,
bezogen auf den Querschnitt des Schleifstücks (1) die obere Begrenzung der im Schleifstück (1) befindlichen Ausnehmung (3) zwischen einem Drittel und einem Sechstel der Höhe des Schleifstücks (1) liegt.

9. Bruchmelder nach einem der Patentansprüche 1 bis 8,
dadurch gekennzeichnet, daß
der verschiebbare Stab (5) den Querschnitt der Ausnehmung (3) weitgehend ausfüllt und nicht an der dem Schleifstückträger (2) zugewandten Seite über sie hinaussteht.

10. Bruchmelder nach einem der Patentansprüche 1 bis 9,
dadurch gekennzeichnet, daß
der Spalt (10) zwischen einer Seitenwand der Ausnehmung (3) und der dieser Seitenwand direkt benachbarten Wand des Stabes (5) nicht mehr als 0,5 mm beträgt.

11. Bruchmelder nach einem der Patentansprüche 1 bis 9,
dadurch gekennzeichnet, daß
der Spalt (10) zwischen einer Seitenwand der Ausnehmung (3) und der dieser Seitenwand direkt benachbarten Wand des Stabes (5) nicht mehr als 0,1 mm beträgt.

## Claims

1. Break indicator for a collector shoe (1), on a current-collector device of electrically operated vehicles, the collector shoe (1) transmitting electrical current and consisting substantially of carbon or completely of carbon, being firmly anchored to the collector-shoe support (2) of the current-collector device, with the collector shoe (1) at the side facing the collector-shoe support (2) having over at least a substantial part of its longitudinal extent a recess (3) extending in a straight line,
characterized in that
a bar (5) adapted to the form of this recess (3) with regard to cross section and length is inserted in the recess in such a way that it can still be displaced along the longitudinal extent of the recess (3), in that this bar (5) consists of a brittle material and, when the collector shoe (1) breaks, this bar also breaks as a result of its arrangement in the recess (3) and its susceptibility to brittle fracture,
and in that this bar (5) is fixed at a first end in an immoveable fastening (23) and is secured at the end opposite the first end by a displaceable element (7) of a holding device (14), which element loads the bar (5) with a tensile force, with this holding device (14) being constructed in such a way that, upon breaking of the collector shoe (1), and thus of the bar (5) located therein, the displaceable holding element (7) of the holding device (14) and the broken part of the bar (5) connected thereto are no longer secured to move in the direction of the action of the tensile force and according to set a switching and control mechanism into operation which leads to the release of a warning signal or to the current collector being put out of operation.

2. Break indicator according to claim 1, characterized in that the recess (3) extending in a straight line is located in the half of the collector shoe (1) which faces the collector-shoe support (2).

3. Break indicator according to claim 1 and 2, characterized in that the bar (5) in the recess (3) consists of carbon or graphite.

4. Break indicator according to claim 1 and 2, characterized in that the bar (5) in the recess (3) consists of ceramics.

5. Break indicator according to claim 1 and 2, characterized in that the bar (5) in the recess (3) consists of a synthetic resin which is brittle at temperatures up to + 120°C and has a content of more than 30% by weight powdery or granular fillers of non-elastic material.

6. Break indicator according to one of claims 1 to 5, characterized in that the tensile force acting on the bar (5) is applied by means of a pressure spring (13) which acts against a body of the holding device (14) which is constructed as a switching element (7) displaceable when the bar (1) breaks, the body being coupled to the end of the bar.

7. Break indicator according to one of claims 1 to 5, characterized in that the tensile force acting on the bar (5) is applied by means of a piston (7) which is loaded with a pressure fluid, is displaceable in a cylinder (6) firmly connected to the holding device (14), and acts as a moving switching element, the piston being coupled to the end of the bar.

8. Break indicator according to one of claims 1 to 7, characterized in that in relation to the cross section of the collector shoe (1) the upper limiting of the recess (3) located in the collector shoe (1) lies between one third and one sixth of the height of the collector shoe (1).

9. Break indicator according to one of claims 1 to 8, characterized in that the displaceable bar (5) largely fills the cross section of the recess (3) and does not extend beyond it at the side facing the collector-shoe support (2).

10. Break indicator according to one of claims 1 to 9, characterized in that the gap (10) between a side wall of the recess (3) and the wall of the bar (5) directly adjacent to this side wall does not amount to more than 0.5 mm.

11. Break indicator according to one of claims 1 to 9, characterized in that the gap (10) between a side wall of the recess (3) and the wall of the bar (5) directly adjacent to this side wall does not amount to more than 0.1 mm.

## Revendications

1. Détecteur de rupture pour un patin (1) de transmission de courant électrique, ce patin étant principalement réalisé en carbone ou complètement en carbone, appartenant à un dispositif de prise de courant de véhicule à entraînement électrique, le patin (1) étant accroché solidairement au support (2) du dispositif de prise de courant,
- le patin (1) ayant une cavité (3) rectiligne sur son côté tourné vers le support (2), sur au moins une partie importante de sa longueur,
caractérisé en ce que la cavité loge une tige (5) adaptée par sa section et sa longueur à la forme de cette cavité (3), et cette tige peut coulisser dans la direction longitudinale de la cavité (3),
- la tige (5) est en une matière cassante et du fait de sa disposition dans la cavité (3) et de sa nature cassante, en cas de rupture du patin (1), elle se casse également et cette tige (5) est fixée par une première extrémité dans un moyen de fixation (23) non mobile et à son autre extrémité, opposée à la première extrémité, la tige est fixée par un élément coulissant (7) d'un dispositif de fixation (14), qui charge la tige (5) avec une force de traction, le dispositif de fixation (14) étant réalisé pour qu'en cas de rupture du patin (1) et de la tige (5) logée dans le patin, l'élément de fixation (7) coulissant du dispositif de fixation (14) et le morceau cassé de la tige (5) relié à ce dispositif ne sont plus bloqués et peuvent se déplacer dans la direction d'action de la force de traction, et mettre en oeuvre un mécanisme de commutation et de régulation déclenchant un signal avertisseur ou mettant hors service le dispositif de prise de courant.

2. Détecteur de rupture selon la revendication 1, caractérisé en ce que la cavité (3) rectiligne se trouve dans la moitié du patin (1) tournée vers le support de patin (2).

3. Détecteur de rupture selon les revendications 1 et 2, caractérisé en ce que la tige (5) de la cavité (3) est en carbone ou en graphite.

4. Détecteur de rupture selon les revendications 1 et 2, caractérisé en ce que la tige (5) dans la cavité (3) est en céramique.

5. Détecteur de rupture selon les revendications 1 et 2, caractérisé en ce que la tige (5) logée dans la cavité (3) est en une résine synthétique cassante à des températures allant jusqu'à + 120°C, ayant une teneur de plus de 30 % en poids d'une charge pulvérulente ou en grains, d'une matière non élastique.

6. Détecteur de rupture selon l'une des revendications 1 à 5, caractérisé en ce que la force de traction agissant sur la tige (5) est appliquée par un ressort de compression (13) agissant contre un corps du dispositif de fixation (14) réalisé en cas de rupture de la tige (1) comme élément de commutation mobile (7), en étant couplé à l'extrémité de la tige.

7. Détecteur de rupture selon l'une des revendications 1 à 5, caractérisé en ce que la force de traction agissant sur la tige (5) est sollicitée par un fluide sous pression et peut coulisser dans un cylindre (6) relié solidairement au dispositif de fixation (14) et un piston (7) fonctionnant comme élément de commutation mobile est couplé à l'extrémité de la tige.

8. Détecteur de rupture selon l'une des revendications 1 à 7, caractérisé en ce que par rapport à la section du patin (1), la limite supérieure de la cavité (3) réalisée dans le patin (1) est comprise entre un tiers et un sixième de la hauteur du patin (1).

9. Détecteur de rupture selon l'une des revendications 1 à 8, caractérisé en ce que la tige coulissante (5) remplit pratiquement la section de la cavité (3) et on dépasse par le côté non tourné vers le support de patin (2).

10. Détecteur de rupture selon l'une des revendications 1 à 9, caractérisé en ce que l'intervalle (10) entre une paroi latérale de la cavité (3) et la paroi de la tige (5) directement voisine de cette paroi latérale ne dépasse pas 0,5 mm.

11. Détecteur de rupture selon l'une des revendications 1 à 9, caractérisé en ce que l'intervalle (10) entre une paroi latérale de la cavité (3) et la paroi directement voisine de cette paroi (2), la tige (5) ne dépasse pas 0,1 mm.
